# EUROPÄISCHE PATENTSCHRIFT

(11) **EP 3 114 372 B1**
(45) Veröffentlichungstag und Bekanntmachung des Hinweises auf die Patenterteilung: **13.06.2018**
(21) Anmeldenummer: 15704750.7
(22) Anmeldetag: 06.02.2015
(51) Int. Cl.: F16H 61/00, F16H 57/04

(54) **VERFAHREN ZUM ANSTEUERN EINES HYDRAULIKMITTELVERSORGUNGSSYSTEMS EINES AUTOMATIKGETRIEBES**
METHOD FOR ACTUATING A HYDRAULIC MEDIUM SUPPLY SYSTEM OF AN AUTOMATIC TRANSMISSION
PROCÉDÉ DE COMMANDE D'UN SYSTÈME D'ALIMENTATION EN FLUIDE HYDRAULIQUE D'UNE TRANSMISSION AUTOMATIQUE

(30) Priorität: 06.03.2014 DE 102014204067
(43) Veröffentlichungstag der Anmeldung: 11.01.2017
(73) Patentinhaber: ZF Friedrichshafen AG, 88046 Friedrichshafen (DE)
(72) Erfinder: LOCHER, Karl, 72539 Pfronstetten-Tigerfeld (DE); HOFFMANN, Alexander, 66822 Lebach (DE); TERWART, Markus, 97711 Thundorf (DE); NOVAK, Rainer, A-6900 Bregenz (AT); BADER, Martin-Joachim, 88284 Mochenwangen (DE)
(86) Internationale Anmeldenummer: PCT/EP2015/052480
(87) Internationale Veröffentlichungsnummer: WO 2015/132036

(56) Entgegenhaltungen:
- DE-A1- 2 518 103
- DE-A1-102011 075 411
- US-A- 2 895 344

## Beschreibung

Die vorliegende Erfindung betrifft ein Verfahren zum Ansteuern eines Hydraulikmittelversorgungssystems eines Automatikgetriebes eines Fahrzeuges gemäß der im Oberbegriff des Patentanspruches 1 näher definierten Art.

Automatikgetriebe benötigen zumindest ein Hydraulikmittelversorgungssystem zur Hydraulikmittelversorgung von Getriebeelementen, wie zum Beispiel Schaltelemente oder dergleichen. Zur Hydraulikmittelversorgung des Systems sind oftmals eine motorseitig angetriebene Hydraulikpumpe und eine getriebeabtriebsseitige bzw. radsatzseitig angetriebene Hydraulikpumpe vorgesehen. Die vorgesehenen Hydraulikpumpen können getrennten Hydraulikmittelhaushalten bzw. Systemen zugeordnet sein, so dass die motorseitig angetriebene Hydraulikpumpe zur Systemdruckerzeugung und die radsatzseitig angetriebene Hydraulikpumpe zur Radsatzkühlung verwendet werden. Somit bedienen die Hydraulikpumpen baulich getrennte Ölhaushalte bzw. Hydraulikmittelversorgungskreise und können somit sich nicht gegenseitig unterstützen. Es ist auch bekannt, dass die Hydraulikpumpen einem gemeinsamen Hydraulikmittelversorgungskreis zugeordnet sind.

Beispielsweise zeigt das Dokument US 2,895,344 ein Hydraulikmittelversorgungssystem mit einer motorseitig angetriebenen Hydraulikpumpe und einer weiteren radsatzseitig angetriebenen Hydraulikpumpe, die trieblich mit dem Getriebeabtrieb verbunden ist.

Es hat sich in nachteiliger Weise gezeigt, dass eine derartige Hydraulikmittelversorgung bei bestimmten Betriebsmodi des Fahrzeuges zum Beispiel keinen Systemdruck zum Betätigen von Schaltelementen zur Verfügung stellt, so dass z. B. eine Gangnachführung oder eine Kupplungsbefüllung aufgrund fehlendem Systemdruck während vorbestimmter Betriebsmodi nicht möglich ist.

Der vorliegenden Erfindung liegt die Aufgabe zu Grunde, ein Verfahren zum Ansteuern eines Hydraulikmittelversorgungssystems der eingangs beschriebenen Gattung vorzuschlagen, welches eine verbrauchsoptimierte Ansteuerung des Hydraulikmittelversorgungssystems des Automatikgetriebes gewährleistet.

Diese Aufgabe wird erfindungsgemäß durch die Merkmale des Patentanspruches 1 gelöst, wobei sich vorteilhafte Weiterbildungen aus den Unteransprüchen, der Beschreibung und den Zeichnungen ergeben.

Es wird ein Verfahren zum Ansteuern eines oder mehrerer Hydraulikmittelversorgungssysteme eines Automatikgetriebes, insbesondere eines Doppelkupplungsgetriebes, eines Fahrzeuges vorgeschlagen, wobei das Hydraulikmittelversorgungssystem zumindest von einer motorseitig angetriebenen Hydraulikpumpe und von einer radsatzseitig angetriebenen Hydraulikpumpe mit Hydraulikmittel versorgt wird. Ein Stauventil des Hydraulikmittelversorgungssystems zur Öl- bzw. Hydraulikmittelversorgung wird in Abhängigkeit von erfassten Fahrzeugparametern oder dergleichen zum Einstellen einer angepassten verbrauchsoptimierten Leistungsverteilung bei den Hydraulikpumpen angesteuert.

Demzufolge wird zunächst der jeweilige Betriebsmodus des Fahrzeuges ermittelt und in Abhängigkeit des erfassten Betriebsmodus wird eine geeignete Ansteuerung der Hydraulikpumpen über das Stauventil realisiert, um dadurch eine verbrauchsoptimierte Leistungsverteilung bei den Hydraulikpumpen für die Hydraulikmittelversorgung vorzunehmen. Beispielsweise können die Fahrzeugparameter von der elektronischen Getriebesteuerung erfasst und entsprechend ausgewertet werden, um die als Modelle hinterlegten Betriebsmodi zu erkennen. Das Stauventil wird entsprechend der vorgegebenen Betriebsmodi angesteuert und nimmt somit unterschiedliche Schaltpositionen ein.

Beispielsweise können bei dem vorgeschlagenen Verfahren verschiedene Betriebsmodi erfasst werden. Ein erster Betriebsmodus ist zum Beispiel eine aktivierte Segelfunktion bei einem Fahrzeug. Dies bedeutet, dass das Fahrzeug mit nicht kraftschlüssigem Antriebsstrang bewegt wird bzw. segelt. Der grundlegende Vorteil ist, dass beim Segeln ohne Motorlauf und somit daraus resultierender Nullförderung der motorseitig angetriebenen Hydraulikpumpe, zum Beispiel einer Flügelzellenpumpe, die radsatzseitig angetriebene Hydraulikpumpe aufgrund entsprechender Ansteuerung die Aufrechterhaltung eines begrenzten Systemdruckes Drucks übernimmt. Mit diesem reduzierten Systemdruck können zum Beispiel Gänge nachgeführt und Kupplungen befüllt werden. Ein zweiter Betriebsmodus ist z. B. die aktivierte Segelfunktion mit Motorlauf. Ein dritter Betriebsmodus ist der normale Betrieb des Fahrzeuges im nicht segelnden Fahrzustand. Es sind auch weitere Betriebsmodi von dem erfindungsgemäßen Verfahren erfassbar.

Nachfolgend wird die vorliegende Erfindung anhand der Zeichnungen weiter erläutert. Es zeigen:
- Figur 1: eine schematische Ansicht eines Hydraulikmittelversorgungssystems eines Automatikgetriebes eines Fahrzeuges; und
- Figur 2: eine schematische Ansicht eines möglichen Ablaufschemas des erfindungsgemäßen Verfahrens zum Ansteuern des Hydraulikmittelversorgungssystems.

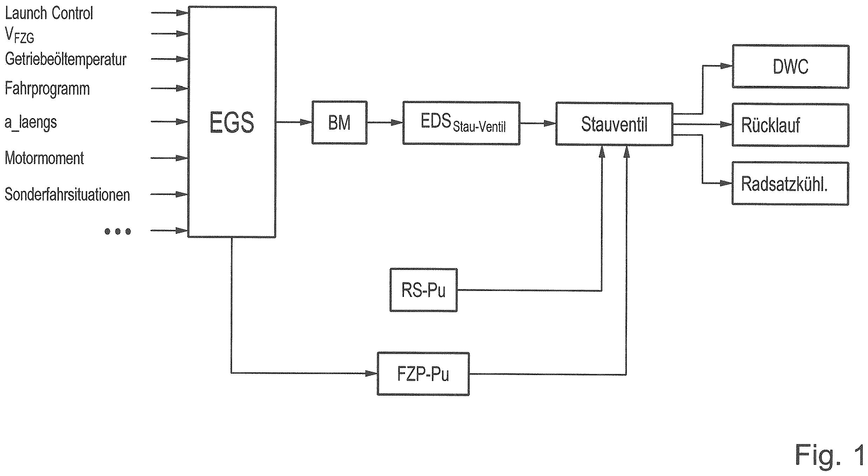

In Figur 1 ist schematisch ein Hydraulikmittelversorgungssystem für ein Automatikgetriebe, insbesondere ein Doppelkupplungsgetriebe, eines Fahrzeuges beispielhaft dargestellt. Das Hydraulikmittelversorgungssystem umfasst einen Hydraulikmittelkreislauf, der zum Kühlen und Betätigen sowie Schmieren von Getriebeelementen des Automatikgetriebes vorgesehen ist. Der Hydraulikmittelkreislauf wird über eine antriebsseitig angetriebene Hydraulikpumpe FZP-Pu und eine radsatzseitige angetriebene Hydraulikpumpe RS-Pu mit Hydraulikmittel bzw. Öl versorgt. Der Hydraulikmittelkreislauf ist mit einem Rücklauf zum Ölkühler und zum Hydraulikmittelsumpf verbunden. In dem Hydraulikmittelversorgungssystem ist zudem ein Stauventil angeordnet, mit dem die Volumenströme regelbar sind. Das Stauventil wird über einen elektrischen Drucksteller EDS angesteuert.

Über die elektronische Getriebesteuerung EGS werden verschiedene Fahrzeugparameter erfasst und ausgewertet. Aufgrund der ausgewerteten Fahrzeugparameter wird ein entsprechender Betriebsmodus BM1, BM2, BM3 ermittelt. Im Rahmen des beispielhaft dargestellten Ablaufdiagrammes wird als erster Betriebsmodus BM1 der Fahrzustand bei aktivierter Segelfunktion ohne Motorlauf erkannt, während als zweiter Betriebsmodus BM2 der Fahrzustand bei aktivierter Segelfunktion ohne Motorlauf, also mit aktiviertem Antriebsmotor bzw. Verbrennungsmotor, erkannt wird. Bei dem dritten Betriebsmodus BM3 ist die Segelfunktion deaktiviert. Dementsprechend befindet sich das Fahrzeug im normalen, nicht segelnden Fahrzustand.

Dem jeweiligen Betriebsmodus BM1, BM2, BM3 sind entsprechende Ansteuerungsmodelle für das Stauventil zugeordnet, wobei die entsprechende Ansteuerung über den elektrischen Drucksteller EDS erfolgt. Auf diese Weise werden entsprechende Schaltpositionen bei dem Stauventil eingestellt, so dass die Hydraulikmittelversorgung zum Beispiel für die Versorgung der Doppelkupplung DWC, für die Radsatzkühlung und - schmierung oder dergleichen gewährleistet ist, wobei überschüssiges Hydraulikmittel dem Rücklauf, also dem Kühler bzw. dem Sumpf zugeordnet wird.

Zur Hydraulikmittelversorgung des Hydraulikmittelversorgungssystems sind sowohl eine motorseitig angetriebene Hydraulikpumpe bzw. Flügelzellenpumpe FZP-Pu und eine radsatzseitig angetriebene Hydraulikpumpe RS-Pu zugeordnet.

Als mögliche Fahrzeugparameter kann die elektronische Getriebesteuerung EGS zum Beispiel die Launch-Control, die Fahrzeuggeschwindigkeit V_{FZG}, die Getriebeöltemperatur, das jeweilige Fahrprogramm, die Fahrzeug-Längsbeschleunigung a_laengs, das Motormoment, Sonderfahrsituationen, wie z. B. Start-Stopp-Betrieb und erhöhter Schlupfbetrieb, oder dergleichen erfassen.

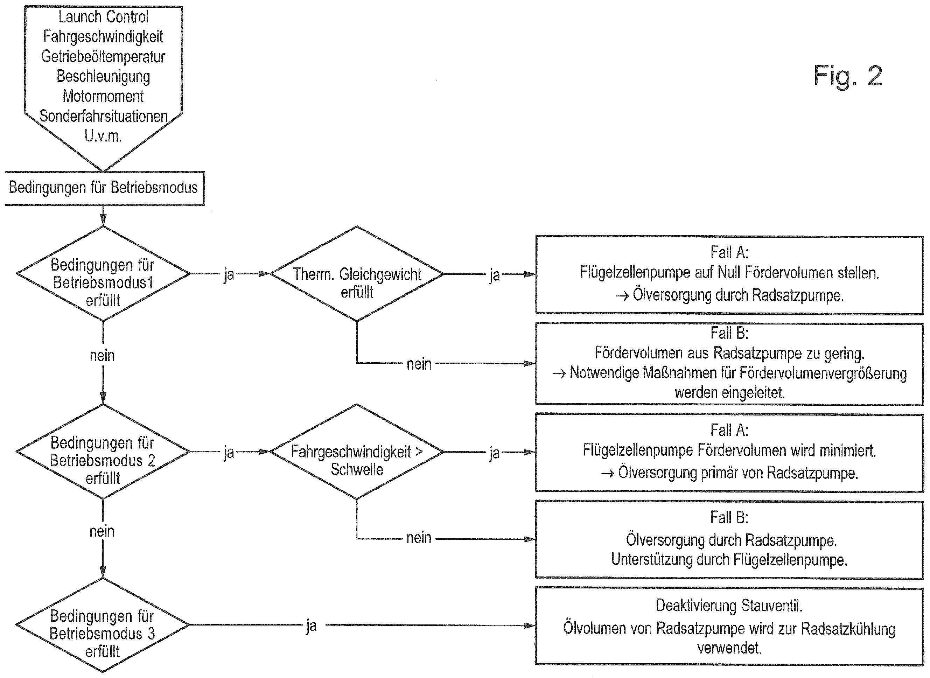

In Figur 2 ist ein entsprechendes Ablaufdiagramm des vorgeschlagenen Verfahrens bzw. der vorgeschlagenen Verfahrensweise beispielhaft dargestellt. Zunächst werden aus den erfassten Fahrzeugparametern die Bedingungen für das Vorliegen eines entsprechenden Betriebsmodus BM1, BM2, BM3 ermittelt.

Wenn die Bedingungen für den ersten Betriebsmodus BM1 erfüllt sind und zusätzlich ein thermisches Gleichgewicht vorliegt, wird über die Flügelzellenpumpe bzw. über die motorseitig angetriebene Hydraulikpumpe FZP-Pu das Fördervolumen auf null reduziert und die Hydraulikmittel- bzw. Ölversorgung durch die radsatzseitig angetriebene Hydraulikpumpe RS-Pu durchgeführt.

In diesem Betriebsmodus BM1 wird von der motorseitig angetriebenen Hydraulikpumpe bzw. Flügelzellenpumpe FZP-Pu kein Ölvolumenstrom erzeugt. Das Stauventil wird über den elektrischen Drucksteller EDS mit inverser Charakteristik maximal bestromt. Daraus folgt, dass das Stauventil mittels Federkraft geregelt wird. Dies führt zu einem höheren hydraulischen Widerstand und somit zu einer Erhöhung des Druckes der radsatzseitig angetriebenen Hydraulikpumpe RS-PU. Die radsatzseitig angetriebene Hydraulikpumpe RS-PU kann in diesem Fahrzustand einen von der Federkraft des Stauventils abhängigen Systemdruck von ca. 3, 5 bar erzeugen. Mit diesem Systemdruck kann bei stillstehendem Verbrennungsmotor die Gangnachführung sowie die Kupplungsbefüllung durchgeführt werden. Dies stellt eine deutliche Leistungsverbesserung bei einem möglichen Segelausstieg d.h. dem Beenden der Segelfunktion bei dem Fahrzeug dar. In dieser Fahrsituation durchströmt der überschüssige Hydraulikmittelvolumenstrom den Rücklauf zum Ölkühler bzw. zum Hydraulikmittelsumpf.

Wenn kein thermisches Gleichgewicht beim Betriebsmodus BM1 vorliegt, ist das Fördervolumen der radsatzseitig angetriebenen Hydraulikpumpe RS-Pu zu gering, so dass als notwendige Maßnahme eine Fördervolumenvergrößerung eingeleitet wird. Somit wird in Fahrsituationen, in denen das thermische Gleichgewicht aufgrund des zu geringen Fördervolumens der radsatzseitig angetriebenen Hydraulikpumpe RS-Pu nicht mehr gewährleistet ist, eine Motorstart-Anforderung an die Motorsteuerung ausgegeben. Somit kann die Flügelzellenpumpe bzw. die motorseitig angetriebene Hydraulikpumpe FZP-Pu die radsatzseitig angetriebene Hydraulikpumpe RS-Pu unterstützen.

Wenn die Bedingungen für den zweiten Betriebsmodus BM2 erfüllt sind und zusätzlich die Fahrzeuggeschwindigkeit V_{FZG} eine vorbestimmte Schwelle überschritten hat, wird das Fördervolumen der motorseitig angetriebenen Hydraulikpumpe FZP-Pu minimiert und die Hydraulikmittelversorgung bzw. Ölversorgung primär von der radsatzseitig angetriebenen Hydraulikpumpe RS-Pu durchgeführt.

In diesem Betriebsmodus BM2 segelt das Fahrzeug mit einer vorbestimmten Fahrzeuggeschwindigkeit V_{FZG}, bei der die Förderleistung der radsatzseitig angetriebenen Hydraulikpumpe RS-Pu für die Aufrechterhaltung des thermischen Gleichgewichts des Radsatzes ausreichend ist. Demzufolge kann die Förderleistung der motorseitig angetriebenen Hydraulikpumpe FZP-Pu minimiert werden, zum Beispiel für das Segeln mit eingelegten Gängen. Die Radsatzpumpe RS-Pu kann bei einem minimalen Systemdruck auch für Siegelaustrittsvorgänge, zum Beispiel zur Kupplungsbefüllung, herangezogen werden. Des Weiteren durchströmt der überschüssige Kühlölvolumenstrom den Ölkühler.

Wenn die Bedingungen für den zweiten Betriebsmodus BM2 erfüllt sind und zusätzlich die vorbestimmte Geschwindigkeitsschwelle unterschritten ist, wird die Ölversorgung durch die radsatzseitig angetriebene Hydraulikpumpe RS-Pu mit Unterstützung durch die antriebsseitig angetriebene Hydraulikpumpe FZP-Pu durchgeführt.

In diesem Betriebsmodus BM2 segelt das Fahrzeug mit geringer Fahrzeuggeschwindigkeit, zum Beispiel kleiner 20 Km/h. In diesem Fahrzustand ist die Förderleistung der radsatzseitig angetriebenen Hydraulikpumpe RS-Pu nicht mehr ausreichend für die Aufrechterhaltung des Systemdruckes. Nun wird das Staudruckventil entsprechend bestromt, sodass die motorseitig angetriebene Hydraulikpumpe FZP-Pu den Ölvolumenstrom bis zum vorgegebenen Sollvolumenstrom ergänzen kann.

Wenn die Bedingungen für den dritten Betriebsmodus BM3 erfüllt sind, wird das Stauventil deaktiviert, wobei der Kühlölvolumenstrom von der radsatzseitig angetriebenen Hydraulikpumpe RS-Pu zur Radsatzkühlung verwendet wird.

In diesem Betriebsmodus BM3 wird das Stauventil durch entsprechende Bestromung des elektrischen Druckstellers EDS an den Endanschlag gedrückt. Dies bedeutet, dass die Funktionalität des Stauventils deaktiviert wird. In dieser Stellung ist das Stauventil geöffnet und der Kühlölvolumenstrom von der radsatzseitig angetriebenen Hydraulikpumpe RS-Pu wird zur Radsatzkühlung verwendet. Dies hat den Vorteil, dass die radsatzseitig angetriebene Hydraulikpumpe RS-Pu in dieser Stellung nur minimale Verluste hat.

### Bezugszeichen

- EGS: elektronische Getriebesteuerung
- V_{FZG}: Fahrzeuggeschwindigkeit
- a_laengs: Längsbeschleunigung
- BM1: erster Betriebsmodus
- BM2: zweiter Betriebsmodus
- BM3: dritter Betriebsmodus
- EDS: elektromagnetischer Drucksteller
- DWC: Doppelkupplung
- FZP-Pu: motorseitig angetriebene Hydraulikpumpe bzw. Flügelzellenpumpe
- RS-Pu: Radsatzpumpe

## Patentansprüche

1. Verfahren zum Ansteuern eines Hydraulikmittelversorgungssystems eines Automatikgetriebes eines Fahrzeuges, wobei das Hydraulikmittelversorgungssystem zumindest von einer motorseitig angetriebenen Hydraulikpumpe (FZP-Pu) und von einer radsatzseitig angetriebenen Hydraulikpumpe (RS-Pu) mit Hydraulikmittel versorgt wird, **dadurch gekennzeichnet, dass** ein Stauventil des Hydraulikmittelversorgungssystems zur Hydraulikmittelversorgung in Abhängigkeit von erfassten Fahrzeugparametern zum Einstellen einer angepassten Leistungsverteilung bei den Hydraulikpumpen (FZP-Pu, RS-Pu) angesteuert wird, dass in Abhängigkeit von erfassten Fahrzeugparametern ein jeweils vorliegender Betriebsmodus (BM1, BM2, BM3) des Fahrzeuges zur Ansteuerung des Stauventils ermittelt wird und dass bei erfasstem ersten Betriebsmodus (BM1), bei dem das Fahrzeug ohne Motorlauf segelt, im Falle eines thermischen Gleichgewichtes das Stauventil derart angesteuert wird, dass die Hydraulikmittelversorgung ausschließlich über die radsatzseitige Hydraulikpumpe (RS-Pu) durchgeführt wird oder im Falle eines thermischen Ungleichgewichtes das Stauventil derart angesteuert wird, dass die von der radsatzseitigen Hydraulikpumpe (RS-Pu) durchgeführte Hydraulikmittelversorgung durch die motorseitige Hydraulikpumpe (FZP-Pu) unterstützt wird.

2. Verfahren nach Anspruch 1, **dadurch gekennzeichnet, dass** bei erfasstem zweiten Betriebsmodus (BM2), bei dem das Fahrzeug unter Motorlauf segelt, und bei Erreichen einer vorbestimmten Fahrzeuggeschwindigkeit (V_{FZG}) das Stauventil derart angesteuert wird, dass über die motorseitig angetriebene Hydraulik-pumpe (FZP-Pu) ein minimaler Volumenstrom zur Hydraulikmittelversorgung gefördert wird, wobei primär über die radsatzseitig angetriebene Hydraulikpumpe (RS-Pu) die Hydraulikversorgung durchgeführt wird.

3. Verfahren nach Anspruch 1, **dadurch gekennzeichnet, dass** bei erfasstem zweiten Betriebsmodus (BM2), bei dem das Fahrzeug unter Motorlauf segelt, und bei Unterschreitung einer vorbestimmten Fahrzeuggeschwindigkeit (V_{FZG}) das Stauventil derart angesteuert wird, dass die Hydraulikmittelversorgung durch die radsatzseitig angetriebene Hydraulikpumpe (RS-Pu) durchgeführt wird, wobei die motorseitig angetriebene Hydraulikpumpe (FZP-Pu) unterstützend verwendet wird.

4. Verfahren nach einem der Ansprüche 1 bis 3, **dadurch gekennzeichnet, dass** bei erfasstem dritten Betriebsmodus (BM3), bei dem sich das Fahrzeug im nicht segelnden Fahrzustand befindet, das Stauventil deaktiviert wird und der Volumenstrom der radsatzseitig angetriebenen Hydraulikpumpe (RS-Pu) zur Radsatzkühlung verwendet wird.

## Claims

1. Method for actuating a hydraulic medium supply system of an automatic transmission of a vehicle, wherein the hydraulic medium supply system is supplied with hydraulic medium at least by a hydraulic pump (FZP-Pu) which is driven on the engine side and by a hydraulic pump (RS-Pu) which is driven on the wheelset side, **characterized in that** an accumulator valve of the hydraulic medium supply system is actuated in order to supply hydraulic medium as a function of detected vehicle parameters for setting an adapted power distribution at the hydraulic pumps (FZP-Pu, RS-Pu), **in that** a respectively present operating mode (BM1, BM2, BM3) of the vehicle for actuating the accumulator valve is determined as a function of detected vehicle parameters and **in that** when a first operating mode (BM1) in which the vehicle is coasting without the engine running is detected, in the case of a thermal equilibrium the accumulator valve is actuated in such a way that the hydraulic medium is supplied exclusively via the wheel-set-side hydraulic pump (RS-Pu), or in the case of a thermal disequilibrium the accumulator valve is actuated in such a way that the supply of hydraulic medium which is carried out by the wheel-set-side hydraulic pump (RS-Pu) is assisted by the engine-side hydraulic pump (FZP-Pu).

2. Method according to Claim 1, **characterized in that** when a second operating mode (BM2) in which the vehicle coasts with the engine running is detected and when a predetermined vehicle velocity (V_{FZG}) is reached, the accumulator valve is actuated in such a way that a minimum volume flow for supplying hydraulic medium is fed via the hydraulic pump (FZP-Pu) which is driven on the motor side, wherein the hydraulic supply is carried out primarily by means of the hydraulic pump (RS-Pu) which is driven on the wheelset side.

3. Method according to Claim 1, **characterized in that** when a second operating mode (BM2) in which the vehicle coasts with the engine running is detected, and when a predetermined vehicle velocity (V_{FZG}) is undershot, the accumulator valve is actuated in such a way that the hydraulic medium is supplied by the hydraulic pump (RS-Pu) which is driven on the wheelset side, wherein the hydraulic pump (FZP-Pu) which is driven on the motor side is used in an assisting fashion.

4. Method according to one of Claims 1 to 3, **characterized in that** when a third operating mode (BM3) in which the vehicle is in the non-coasting driving state is detected, the accumulator valve is deactivated and the volume flow of the hydraulic pump (RS-Pu) which is driven on the wheelset side is used to cool the wheelset.

## Revendications

1. Procédé de commande d'un système d'alimentation en fluide hydraulique d'une transmission automatique d'un véhicule, dans lequel le système d'alimentation en fluide hydraulique est alimenté en fluide hydraulique au moins par une pompe hydraulique (FZP-Pu) entraînée côté moteur et par une pompe hydraulique (RS-Pu) entraînée côté roues, **caractérisé en ce que** l'on commande une vanne d'arrêt du système d'alimentation en fluide hydraulique pour l'alimentation en fluide hydraulique en fonction de paramètres détectés du véhicule en vue du réglage d'une distribution de puissance adaptée dans les pompes hydrauliques (FZP-Pu, RS-Pu), **en ce que** l'on détermine en fonction de paramètres détectés du véhicule un mode de fonctionnement respectivement présent (BM1, BM2, BM3) du véhicule en vue de la commande de la vanne d'arrêt et **en ce que**, lorsque l'on détecte le premier mode de fonctionnement (BM1), dans lequel le véhicule avance sans que le moteur tourne, on commande la vanne d'arrêt dans le cas d'un équilibre thermique de telle manière que l'alimentation en fluide hydraulique soit assurée exclusivement par la pompe hydraulique côté roues (RS-Pu) ou on commande la vanne d'arrêt dans le cas d'un déséquilibre thermique de telle manière que l'alimentation hydraulique assurée par la pompe hydraulique côté roues (RS-Pu) soit assistée par la pompe hydraulique côté moteur (FZP-Pu).

2. Procédé selon la revendication 1, **caractérisé en ce que**, lorsque l'on détecte le deuxième mode de fonctionnement (BM2), dans lequel le véhicule avance avec le moteur tournant, et lorsque l'on atteint une vitesse prédéterminée du véhicule (V_{FZG}), on commande la vanne d'arrêt de telle manière qu'un courant volumique minimal soit transporté par la pompe hydraulique entraînée côté moteur (FZP-Pu) pour l'alimentation en fluide hydraulique, dans lequel l'alimentation hydraulique est assurée en premier lieu par la pompe hydraulique entraînée côté roues (RS-Pu).

3. Procédé selon la revendication 1, **caractérisé en ce que**, lorsque l'on détecte le deuxième mode de fonctionnement (BM2), dans lequel le véhicule avance avec le moteur tournant, et lorsque l'on descend en dessous d'une vitesse prédéterminée du véhicule (V_{FZG}), on commande la vanne d'arrêt de telle manière que l'alimentation en fluide hydraulique soit assurée par la pompe hydraulique entraînée côté roues (RS-Pu), dans lequel on utilise la pompe hydraulique entraînée côté moteur (FZP-Pu) comme appoint.

4. Procédé selon l'une quelconque des revendications 1 à 3, **caractérisé en ce que**, lorsque l'on détecte le troisième mode de fonctionnement (BM3), dans lequel le véhicule ne se trouve pas en état de mouvement, on désactive la vanne d'arrêt et on utilise le courant volumique de la pompe hydraulique entraînée côté roues (RS-Pu) pour le refroidissement des roues.
